# EUROPEAN PATENT SPECIFICATION

(11) **EP 1 765 489 B1**
(45) Date of publication and mention of the grant of the patent: **11.11.2009**
(21) Application number: 05751063.8
(22) Date of filing: 13.05.2005
(51) Int. Cl.: B01J 19/00, C08F 10/00, C08F 10/06

(54) **APPARATUS AND METHOD FOR ZIEGLER-NATTA RESEARCH**
VORRICHTUNG UND VERFAHREN FÜR DIE ZIEGLER-NATTA-FORSCHUNG
APPAREIL ET PROCEDE DE RECHERCHE ZIEGLER-NATTA

(30) Priority: 16.06.2004 US 580281 P
(43) Date of publication of application: 28.03.2007
(73) Proprietor: DOW GLOBAL TECHNOLOGIES INC., Midland MI 48674 (US)
(72) Inventor: CAMPBELL, Richard, E., Jr., Midland, MI 48642-3111 (US); CASTILLE, Thomas, G., Richmond, TX 77469 (US); CHEN, Linfeng, Sugar Land, TX 77478 (US); KILTY, Peter, A., Sugar Land, TX 77478 (US); ROMER, Duane, R., Midland, MI 48642 (US)
(74) Representative: Burford, Anthony Frederick
(86) International application number: PCT/US2005/016791
(87) International publication number: WO 2006/007093

(56) References cited:
- EP-A- 1 321 479
- WO-A-00/40331
- DE-A1- 2 441 625
- PEIL KEVIN P ET AL: "Applications of High Throughput Research at the Dow Chemical Company" MACROMOL. RAPID COMMUN.; MACROMOLECULAR RAPID COMMUNICATIONS JAN 2 2004, vol. 25, no. 1, 2 January 2004 (2004-01-02), pages 119-126, XP002340576
- DATABASE WPI Section Ch, Week 197609 Derwent Publications Ltd., London, GB; Class A17, AN 1976-15910X XP002340580 & JP 51 005385 A (KONDO Y) 17 January 1976 (1976-01-17)

## Description

### BACKGROUND

The present invention relates to the field of research for new catalyst compositions especially for use in addition polymerization processes. More particularly, this invention is directed toward a method of performing heterogeneous Ziegler-Natta catalyzed polymerization of olefins and related techniques for rapidly creating and testing libraries of catalyst compositions prepared by combinatorial techniques. This invention is also directed toward a method for using combinatorial techniques in addition polymerizations, especially olefin addition polymerizations.

Combinatorial (also known as high throughput or parallel) chemistry and materials science techniques have been used to rapidly screen large numbers of compounds for use in biological, organic, inorganic, and organometallic synthesis and research. Combinatorial materials science generally refers to the methods for creating a collection of chemically diverse compounds or materials and to methods for rapidly testing or screening this library of compounds or materials for desirable performance characteristics and properties. Areas for application of such combinatorial methods have included the discovery of compounds for use as biologically active materials as well as high-temperature superconductors, magnetoresistive materials, luminescent compounds, and catalysts. Examples include U.S. Patents 5,712,171, 5,776,359, 5,985,356, 6,004,617, 6,030,917, 6,045,671, 6,248,540, 6,326,090, 6,346,290, and 6,627,571, EP-A-978,499, and WO 00/40331.

In addition to the foregoing patent references, numerous academic papers have also disclosed combinatorial techniques, including: Senkan, Nature, vol. 394, pp. 350-353 (July 23, 1998); Burgess et al., Angew. Chem Int. Ed. Eng., 1996, 35, No. 2, pp. 220-222; Maier et al., Angew. Chem. Int. Ed. Eng., 1998, 37, No. 19, pp. 2644-2647; Reetz et al., Angew. Chem Int. Ed. Eng., 1998, 37, No. 19, pp. 2647-2650; Angew. Chem Int. Ed. Eng., 1998, 37, No. 17, pp. 2333-2336; Morken et al., Science vol. 280, pp. 267-270 (April 10, 1998); and Gilbertson et al., Tetrahedron Letters vol. 37, no. 36, pp. 6475-6478 (1996), and Boussie, et al., JACS, 2003, 125, 4306-4317.

Although the foregoing and other references have advanced the art of combinatorial materials testing, still further improvements and advances in the field of Ziegler-Natta catalyst development are desired. In particular, more rapid techniques of screening candidate materials are desired.

In WO 00/40331a combinatorial apparatus and method for evaluating homogeneous and supported homogeneous coordination polymerization catalysts including olefin polymerization catalysts employing a metal compound formed from a metal of Groups 3-15 of the Periodic Table of the Elements and one or more ligands is disclosed.

In U S. Patent 6,627,571, a method for screening heterogeneous catalysts comprising applying a suspension of a catalyst carrier to multiple regions of a substrate and removing liquid there from to form an array of porous catalyst carriers, impregnating the array with a catalytically active component or precursor thereof and analyzing for activity was disclosed.

Ziegler-Natta catalysts can be produced by numerous techniques including physical blending of solid mixtures of magnesium halides with titanium halides or the in situ formation of precipitated halogenated solids from liquid mixtures. Solid phase forming techniques involve the use of ball-mills or other suitable grinding and comminuting equipment and are not adaptable to combinatorial research approaches. Precipitation techniques use repeated halogenations and release of corrosive gaseous by-products which would contaminate adjacent unprotected catalysts deposited on a support. Other aspects of Ziegler-Natta catalysis present significant challenges to the use of combinatorial approaches in automation and reactor design, particularly due to the small size of the reaction vessels employed and the need to handle a plurality of samples. Consequently, the application of combinatorial methods to Ziegler-Natta process research has not been adequately explored.

It would be desirable if combinatorial research techniques could be applied to heterogeneous catalysts, especially to Ziegler-Natta catalyst compositions, comprising at least one transition metal compound, optionally supported on an inert solid material. In particular, what is needed is a combinatorial method for the rapid and reliable discovery and development of catalyst compositions that is particularly adapted to use in addition polymerization research, especially research related to the addition polymerization of olefin monomers to form high molecular weight polymers using Ziegler-Natta catalysts.

### SUMMARY OF THE INVENTION

This invention provides methods for performing the combinatorial synthesis of libraries and screening of those combinatorial libraries particularly adapted for use in addition polymerizations employing Ziegler-Natta catalysts. In particular, the invention provides a method for identifying a catalyst composition for use in the heterogeneous Ziegler-Natta addition polymerization of an olefin monomer comprising providing a first library comprising a plurality of previously selected solid compounds, complexes or mixtures thereof comprising a derivative of a metal of Group 2 of the Periodic Table of the Elements; forming a catalyst composition by sequentially converting the members of said library via solid-to-solid metathesis into solid procatalyst compositions thereby forming a second library; sequentially selecting members of the second library and contacting the members with an olefin monomer under olefin addition polymerization conditions in a polymerization reactor in order to produce a resulting polymer product; measuring at least one process or product variable of interest during the polymerization, and selecting the catalyst composition of interest by reference to said process or product variable.

The broadest concept of the methodology is that a library of catalyst compositions is created that is screened for olefm polymerization activity, especially by measurement of process variables under polymerization conditions. The libraries are created from arrays of transition metal complexes or compounds or mixtures or multi-level arrays thereof by one or more conversion steps to form catalyst compositions. The resulting products are then screened for polymerization activity under Ziegler-Natta reaction conditions, usually by forming a mixture or solution of one or more of the foregoing catalyst compositions with one or more cocatalysts or activators and optionally one or more polymerization modifier compounds. This invention provides a number of embodiments for performing such synthesis and screening, and the embodiments may be combined together.

In the library, each member may have a common property or functionality, but will vary in structural diversity, molecular weight or some other variable to be tested (rational variation). Alternatively, the library may contain a mixture of diverse compounds with no unifying feature or structure (random variation). The individual members of the library are mostly different from each other in some chemically significant manner, however, for purposes of calibration, some repetition of library members may be desired. Optionally, one or more daughter libraries are created from the parent library by taking one or more aliquots from one or more members of the parent library and combining them, optionally with any additional components. For example, each daughter library may be considered to be a replica of the original library, but include one or more additional components or chemical operations. At least one precursor or procatalyst compounds should be present in at least a portion of the members of the precursor library or a daughter library to create one or more catalyst libraries, which are then subjected to addition polymerization conditions. The polymerization may be used to create a product library, that is a polymer library. Alternatively, the polymerization serves as a screen for activity. The process conditions may also be combinatorialized, such as by varying amounts of reactants or different polymerization process conditions such as time, temperature, pressure, stirring rate, order of reagent addition, etc. The method optionally may provide different screening stages, such as a primary screen to eliminate some members from a library from going on to a secondary screen.

One embodiment of the present invention starts with a procatalyst library that includes a plurality of member compounds, comprising at least one complex or compound of a Group 2 metal. The compounds generally will differ by composition, by structure, or by both composition and structure. Examples include compounds such as alkoxides, halides or carboxylates of a Group 2 metal, or Lewis base containing derivatives thereof, or mixtures of the foregoing compounds or complexes. If desired, the library may also begin with precursors to the foregoing procatalysts and incorporate an additional level of synthesis in preparing a daughter library comprising the desired procatalyst compositions.

The library (precursor library or procatalyst library) is subjected to one or more conversion processes that may involve one or more steps or repetitions of steps involving one or more reagents or polymerization modifiers in order to form a catalyst composition to be screened. Examples of such conversion processes include halogenation, titanation or other chemical conversion of the procatalyst, addition of one or more solvents, mixing, heating, cooling, filtering, extracting, or simply aging. In addition, additives, such as internal electron donors, external electron donors, or other polymerization modifiers may be added for purposes of imparting desired properties, such as polymer selectivity, to the resulting catalyst. Separate libraries of such additives may also be employed in combination with the library of procatalyst compounds (or precursor compounds) in order to evaluate and screen various combinations of precursors, procatalysts and additives.

The foregoing manipulations require the use of a cell or other suitable reaction vessel capable of allowing measured addition of reagents, adequate mixing and manipulation of the resulting reaction mixtures, heating and or cooling of the reactor contents, separations of products, and removal of by-products, solvents, or other constituents. Desirably, each reaction cell or vessel is sealed and subjected to an inert atmosphere or otherwise isolated from other reaction cells and from the library or libraries in order to prevent loss of volatile reactor components or contamination of other reagents, reactors, or reaction mixtures. Highly desirably, each reactor or cell is equipped with or has access to a filtration means that allows for ready separation of liquids from any solid reactor contents in the cell. Thus, in one embodiment, a filtration device is externally mounted and inserted into the cell for purposes of performing the foregoing separation and thereafter removed or disengaged from the cell upon completion of the separation.

As mentioned above, the olefin polymerization procatalyst precursors employed in the invention comprise a Group 2 metal compound, preferably derivatives of magnesium. Sources for such magnesium moieties include anhydrous magnesium chloride, magnesium alkoxides or aryloxides, or carboxylated magnesium alkoxides or aryloxides. Preferred sources of magnesium moieties are magnesium (C₁₋₄)alkoxides, especially magnesium compounds or complexes containing at least one ethoxy group. Additionally, the precursors desirably comprise titanium moieties. Suitable sources of titanium moieties include titanium alkoxides, titanium aryloxides, and/or titanium halides. Preferred precursors comprise one or more magnesium (C₁₋₄)alkoxides or halides and one or more titanium (C₁₋₄)alkoxides or halides.

Various methods of making procatalyst precursor compounds are known in the art. These methods are described, inter alia, in US-A-5,034,361; 5,082,907; 5,151,399; 5,229,342; 5,106,806; 5,146,028; 5,066,737; 5,077,357; 4,442,276; 4,540,679; 4,547,476; 4,460,701; 4,816,433; 4,829,037; 4,927,797; 4,990,479; 5,066,738; 5,028,671; 5,153,158; 5,247,031; 5,247,032, and elsewhere. In a preferred method, the preparation involves chlorination of the foregoing mixed magnesium and titanium alkoxides, and may involve the use of one or more compounds, referred to as "clipping agents", that aid in forming specific compositions via a solid/solid metathesis. Examples of suitable clipping agents include trialkylborates, especially triethylborate, phenolic compounds, especially cresol, and silanes.

A preferred procatalyst precursor for use herein is a mixed magnesium/titanium compound of the formula Mg_{d}Ti(OR^{e})ₑX_{f} wherein R^{e} is an aliphatic or aromatic hydrocarbon radical having 1 to 14 carbon atoms or COR' wherein R' is an aliphatic or aromatic hydrocarbon radical having 1 to 14 carbon atoms; each OR^{e} group is the same or different; X is independently chlorine, bromine or iodine; d is 0.5 to 5, preferably 2-4, most preferably 2.5-3.5; e is 2-12, preferably 6-10, most preferably 8; and f is 1-10, preferably 1-3, most preferably 1.5-2.5. The precursors are ideally prepared by controlled precipitation through removal of an alcohol from the reaction mixture used in their preparation. An especially desirable reaction medium comprises a mixture of an aromatic liquid, especially a chlorinated aromatic compound, most especially chlorobenzene, an alkanol, especially ethanol, and an inorganic chlorinating agent. Suitable inorganic chlorinating agents include chlorine derivatives of silicon, aluminum and titanium, especially titanium tetrachloride or aluminum sequichloride, most especially titanium tetrachloride. Removal of the alkanol from the solution used in the chlorination, results in precipitation of the solid precursor, having especially desirable morphology and surface area. Moreover, the resulting precursors are particularly uniform particle sized and resistant to particle crumbling as well as degradation of the resulting procatalyst.

The precursor is converted to a solid procatalyst by halogenation with a halogenating agent, especially an inorganic halide compound, preferably a titanium halide compound, in the presence of an internal electron donor. If not already incorporated into the precursor in sufficient quantity, the electron donor may be added separately before, during, or after halogenation. Any method of making, recovering and storing the solid precursor is suitable for use in the present invention.

One suitable method for converting the solid procatalyst precursor into a polymerization procatalyst is by reacting the precursor with a tetravalent titanium halide, an optional hydrocarbon or halohydrocarbon, and an electron donor (if not already present). The preferred tetravalent titanium halide is titanium tetrachloride.

The optional hydrocarbon or halohydrocarbon employed in the production of olefin polymerization procatalyst preferably contains up to 12 carbon atoms inclusive, more preferably up to 9 carbon atoms inclusive. Exemplary hydrocarbons include pentane, octane, benzene, toluene, xylene, and alkylbenzenes. Exemplary aliphatic halohydrocarbons include methylene chloride, methylene bromide, chloroform, carbon tetrachloride, 1,2-dibromoethane, 1,1,2-trichloroethane, trichlorocyclohexane, dichlorofluoromethane and tetrachlorooctane. Exemplary aromatic halohydrocarbons include chlorobenzene, bromobenzene, dichlorobenzenes and chlorotoluenes. Of the aliphatic halohydrocarbons, compounds containing at least two chloride substituents are preferred, with carbon tetrachloride and 1,1,2-trichloroethane being most preferred. Of the aromatic halohydrocarbons, chlorobenzene is particularly preferred.

Suitable electron donors are those electron donors free from active hydrogens that are conventionally employed in the formation of magnesium-based procatalysts. Particularly preferred electron donors include (poly)ethers, (poly)esters, amines, imines, nitriles, phosphines, stibines, arsines, and compounds that can be converted into esters in-situ during the synthesis of the procatalysts, such as phthalic anhydrides, succinic anhydrides, glutaric anhydrides, and phthaloyl chlorides. The more preferred electron donors, however are carboxylic acid esters or ether derivatives thereof, particularly C₁₋₄ alkyl esters of aromatic monocarboxylic or dicarboxylic acids and C₁₋₄ alkyl ether derivatives thereof. Examples of such electron donors are methylbenzoate, ethylbenzoate, isopropylbenzoate, isobutylbenzoate, ethyl p-ethoxybenzoate, ethyl-p-methoxybenzoate, isopropyl-p-ethoxybenzoate, isobutyl-p-ethoxybenzoate, diethylphthalate, dimethylnaphthalenedicarboxylate, diisopropylphthalate, diisobutylphthalate, di-n-propylphthalate, di-n-butylphthalate, 1,2-diethoxybenzene, 1-ethoxy-2-n-propoxybenzene, 1-ethoxy-2-n-butoxybenzene, and 1-ethoxy-2-n-pentoxybenzene. The electron donor can be a single compound or a mixture of compounds. Particularly preferred internal electron donors are: ethylbenzoate, ethyl p-ethoxybenzoate, di(n-butyl)phthalate, di(isobutyl)phthalate, and 1-ethoxy-2-n-pentoxybenzene.

In one embodiment of the invention, the electron donor may be formed in situ, by contacting the procatalyst precursor with an organic halogenating agent, especially benzoyl chloride or phthaloyl dichloride, simultaneously with the foregoing precursor forming step or halogenation step using an inorganic halide compound. Sufficient electron donor usually is provided or prepared in situ, so that the molar ratio of electron donor to the magnesium present in the solid procatalyst at this stage of the preparation is from 0.01:1 to 3:1, preferably from 0.05:1 to 2:1.

The manner in which the procatalyst precursor, the optional hydrocarbon or halohydrocarbon, the electron donor, and the halogenating agent are contacted may be varied within wide limits. In one embodiment, the tetravalent titanium halide is added to a mixture of the electron donor and procatalyst precursor. More preferably however, the procatalyst precursor first is mixed with the tetravalent titanium halide and optional halohydrocarbon, and the electron donor is added last, after a period lasting from 1 to 30 minutes of precontact between the precursor and halogenating agent. Ideally, the contact time and temperature are controlled in order to obtain a solid product having a desired particle morphology. Preferred contacting times of the precursor with the remaining ingredients in the procatalyst composition forming process are at least 10, preferably at least 15 and more preferably at least 20 minutes, up to 10 hours, preferably up to 2 hours, most preferably up to 1 hour, at a temperature from at least -70, preferably at least 25, most preferably at least 60 °C, to a temperature up to 160, preferably up to 140, most preferably up to 130°C. At combinations of higher temperatures or longer contacting times, particle morphology, especially particle size, size distribution and porosity of the resulting solid, procatalyst composition and the catalysts formed therefrom is adversely affected.

Preferred members of the procatalyst library for use herein are mixed magnesium/titanium compounds of the formula: Mg_{d'}Ti(OR^{e})_{e'}X_{f'}(ED)_{g'} wherein R^{e} is an aliphatic or aromatic hydrocarbon radical having 1 to 14 carbon atoms or COR' wherein R' is an aliphatic or aromatic hydrocarbon radical having 1 to 14 carbon atoms; each OR^{e} group is the same or different; X is independently chlorine, bromine or iodine; ED independently each occurrence is an electron donor, especially an aromatic monocarboxylic acid ester or an aromatic dicarboxylic acid diester; d' is 1 to 36, preferably 6-18, most preferably 10-14; e' is 0-3, preferably 0.01-2, most preferably 0.01-1; f' is 20-40, preferably 25-35, most preferably 27-29; and g' is 0.1-3, preferably 0.2-2.5, most preferably 0.3-2.0.

The next step according to the invention involves a metathesis or exchange reaction of a Group 2 metal containing procatalyst composition with a halogenating agent, preferably a chlorinating agent in order to convert residual alkoxide moieties in the solid procatalyst to chloride moieties. Titanium tetrachloride is the preferred chlorinating reagent. The reaction medium preferably is a chlorinated aromatic compound, most preferably chlorobenzene. A small quantity of benzoyl chloride may be present as well during or after the halogenation due to the fact that the alkyl benzoate which is thereby formed as a by-product of the chlorination can act as an effective internal donor and the alkoxide content of the resulting composition is reduced.

Desirably, the residual alkoxide content of the resulting procatalyst composition is 5 weight percent (%) or less, more preferably 3 weight percent or less, most preferably 1 weight percent or less. The foregoing metathesis procedure may be repeated one or more times, as desired until a suitable procatalyst composition is attained. Each such step is desirably conducted in combination with a subsequent purification step, such as a filtration step, a rinsing step, a venting step to remove undesired by-products and/or induce precipitation of solid products, or both steps.

After the foregoing exchange procedure, the resulting procatalyst composition is separated from the reaction medium employed in its preparation, preferably by filtering to produce a moist filter cake. The moist filter cake desirably is then rinsed or washed with a liquid diluent, preferably an aliphatic hydrocarbon to remove unreacted TiCl₄ and may be dried to remove residual liquid, if desired. Typically the procatalyst composition is washed one or more times with an aliphatic hydrocarbon such as pentane, isopentane, hexane, octane, isooctane, or a mixture of such hydrocarbons. The procatalyst composition then can be separated and dried or slurried in a hydrocarbon, especially a relatively viscous, aliphatic hydrocarbon such as mineral oil, for further storage or use.

The procatalyst composition is desirably in the form of porous particles corresponding to the formula: Mg_{d"}Ti(OR^{e})_{e"}X_{f"}(ED)_{g"} (Ether)_{h"} wherein R^{e} is an aliphatic or aromatic hydrocarbon radical having 1 to 14 carbon atoms or COR' wherein R' is an aliphatic or aromatic hydrocarbon radical having 1 to 14 carbon atoms; each OR^{e} group is the same or different; X is independently chlorine, bromine or iodine; ED is an electron donor, especially ethyl benzoate, diisobutyl phthalate, or 1-ethoxy-2-n-pentoxybenzene; Ether is an aliphatic ether, aliphatic polyether or aliphatic (poly)glycol ether; d" is 1 to 50, preferably 6 to 30, most preferably 10 to 25; e" is 0 to 3, preferably 0 to 1.5, most preferably 0 to 0.5; f" is 20 to 100, preferably 25 to 80, most preferably 27 to 60; g" is 0.1 to 3, preferably 0.5 to 2.5, most preferably 0.6 to 2; and h" is 0 to 5, preferably 0.001 to 2, most preferably 0.01 to 1.

Desirably, the procatalyst composition has the following particle physical properties as measured by BET, nitrogen porosimetry, and laser particle analyzer: an average surface area of at least 100 m²/g, preferably at least 250 m²/g, an average pore volume of at least 0.18 cm³/g, preferably at least 0.20 cm³/g, D₅₀ particle size from 10 to 60 µm, preferably from 15 to 55 µm, with D₁₀ from 5 to 45 µm, and D₉₀ from 20 to 80 µm.

The procatalyst composition may be further treated according to one or more of the following procedures. The solid procatalyst composition may be halogenated with a different halogenating agent or complex than previously employed; it may be contacted (extracted) with a solvent, especially a halohydrocarbon; it may be rinsed or washed, heat treated or aged. The foregoing techniques are previously known in the art with respect to different procatalyst compositions. The foregoing additional procedures may be combined in any order or employed separately, or not at all.

In a highly preferred embodiment of the present invention, all steps of the exchange process are conducted in the presence of a titanium halide and a halohydrocarbon diluent, especially TiCl₄ and chlorobenzene. If an organic halogenating agent, such as benzoyl chloride, is employed in any of the metathesis steps, it normally is used in a molar ratio range, based on magnesium from 10-0.01.

The solid procatalyst composition may be extracted, if desired, to remove labile titanium halide species by exposure to a suitable liquid diluent, optionally at an elevated temperature, and filtering the resulting solid. As an example, the solid procatalyst, may be contacted with an halohydrocarbon at an elevated temperature, for example, a temperature of up to 150°C, for a period of time. It is particularly preferred to conduct the extraction at a temperature greater than 45°C, preferably greater than 85°C, more preferably greater than 115°C, and most preferably greater than 120°C, to a temperature up to 300°C, more preferably up to 200°C, and most preferably up to 150°C.

Best results are obtained if the solid and extractant are contacted initially at or near 25 °C and then heated to an elevated temperature. Sufficient tetravalent titanium halide may be provided to further convert any residual alkoxide moieties of the procatalyst to halide groups at the same time as the extraction. The extraction process is conducted in one or more contacting operations, each of which is conducted over a period of time ranging from a few minutes to a few hours.

Suitable extractants include aliphatic, cycloaliphatic, or aromatic hydrocarbons, halogenated derivatives thereof, and mixtures thereof. Exemplary aliphatic hydrocarbons include pentane, and octane. Exemplary cycloaliphatic hydrocarbons include cyclopentane, cyclohexane, and cyclooctane. Exemplary aromatic hydrocarbons include benzene, alkylbenzenes, and dialkylbenzenes. Exemplary halogenated derivatives of the foregoing include methylenechloride, methylene bromide, chloroform, carbon tetrachloride, 1,2-dibromoethane, 1,1,2-trichloroethane, trichlorocyclohexane, dichlorofluoromethane, tetrachlorooctane, chlorinated benzenes, brominated benzenes, and chlorinated toluenes. Particularly preferred aliphatic hydrocarbons include pentane, isopentane, octane, and isooctane. Particularly preferred aromatic hydrocarbons include benzene, toluene, and xylene. Particularly preferred halohydrocarbons include carbon tetrachloride, 1,1,2-trichloroethane, chlorinated benzenes and chlorinated toluenes. Most highly preferred extractants are aromatic hydrocarbons and halohydrocarbons, especially toluene, xylene, ethylbenzene, chlorobenzene and o-dichlorobenzene. Desirably the extractant selected has a boiling point above the temperature used in the extraction so as to avoid the use of high pressure equipment.

Desirably, the resulting catalyst composition is tested for polymerization activity without further delay by combining the same under polymerization conditions with a cocatalyst or activator, any additional polymerization modifiers that are desired, and the monomer or monomers to be polymerized.

The solid procatalyst composition serves as one component of a Ziegler-Natta catalyst composition, in combination with a cocatalyst and, optionally, a selectivity control agent. The cocatalyst component employed in the Ziegler-Natta catalyst system may be chosen from any of the known activators of olefin polymerization catalyst systems employing a titanium halide, especially organoaluminum compounds. Examples include trialkylaluminum compounds and alkylaluminum halide compounds in which each alkyl group independently has from 1 to 20 carbon atoms. The preferred organoaluminum cocatalysts are trimethylaluminum, triethylaluminum, triisopropylaluminum, and triisobutylaluminum. The cocatalyst is preferably employed in a molar ratio of aluminum to titanium of the procatalyst of from 1:1 to 1000:1, but more preferably in a molar ratio of from 10:1 to 300:1.

The third component of the Ziegler-Natta catalyst composition (when used to polymerize C₃ and higher α-olefins) is the selectivity control agent (SCA), or external electron donor. Typical SCAs are those conventionally employed in conjunction with titanium-based Ziegler-Natta catalysts. Illustrative of suitable selectivity control agents are those classes of electron donors employed in procatalyst production as described above, as well as organosilane or polyorganosilane compounds containing at least one silicon-oxygen-carbon linkage. Suitable silicon compounds include those of the formula, R¹ₘSiYₙXₚ, or oligomeric or polymeric derivatives thereof, wherein: R¹ is a hydrocarbon radical containing from 1 to 20 carbon atoms or a dihydrocarbylamino or trihydrocarbylsilyl group containing from 1 to 20 carbon atoms which may be substituted with substituent groups containing halogen, silicon, oxygen, nitrogen, phosphorus, or boron, Y is -OR² or -OCOR² wherein R² is a hydrocarbon radical containing from 1 to 20 carbon atoms, which may be substituted with substituent groups containing halogen, silicon, oxygen, nitrogen, phosphorus, or boron, X is hydrogen or halogen, m is an integer having a value of from 0 to 3, n is an integer having a value of from 1 to 4, p is an integer having a value of from 0 to 1, and preferably 0, and m+n+p= 4. Highly preferably, R¹ in at least one occurrence is not a primary alkyl group, and the non-primary carbon thereof is attached directly to the silicon atom. Examples of R¹ include cyclopentyl, t-butyl, isopropyl or cyclohexyl. Examples of R² include methyl, ethyl, propyl, butyl, isopropyl, phenyl, benzyl and t-butyl. Examples of X are Cl and H. Each R¹ and R² may be the same or different. Silicon compounds in which two or more silicon atoms are linked to each other by a carbon, nitrogen or oxygen atom, such as, siloxanes or polysiloxanes, may also be employed, provided the requisite silicon-oxygen-carbon linkage is also present.

The preferred selectivity control agents are alkyl esters of aromatic carboxylic and dicarboxylic acids, ring alkoxy- substituted derivatives thereof, especially ethyl p-methoxybenzoate or ethyl p-ethoxybenzoate (PEEB), or siloxane compounds, such as n-propyltrimethoaysilane, cyclohexylmethyldimethoxysilane, or dicyclopentyldimethoxysilane, and mixtures thereof. In one embodiment of the invention the foregoing selectivity control agent may form at least a portion of the internal electron donor added during procatalyst production as well. In an alternate modification, the selectivity control agent is added only after formation of the procatalyst and may be added to a catalyst forming mixture or to an olefin polymerization mixture simultaneously or non-simultaneously with addition of the cocatalyst. When mixtures of SCA's are employed, they may be added sequentially to the polymerization, especially if one SCA interacts or competes unfavorably with another SCA.

The selectivity control agent preferably is provided in a quantity of from 0.01 mole to 100 moles per mole of titanium in the procatalyst. Preferred quantities of selectivity control agent are from 0.5 mole to 50 mole per mole of titanium in the procatalyst.

The olefin polymerization catalyst is produced by any suitable procedure of contacting the procatalyst, the cocatalyst and optional selectivity control agent. The method of contacting is not critical. The catalyst components or combinations thereof can be precontacted prior to polymerization to form a preactivated catalyst, and optionally stored as an additional library herein, or the components can be contacted simultaneously with contact with an olefin monomer in a suitable reactor. In one modification, the catalyst components simply are mixed in a suitable vessel and the preformed catalyst thereby produced is introduced into the polymerization reactor when initiation of polymerization is desired for purposes of catalyst screening. In an alternate modification, the catalyst components are separately introduced into the polymerization reactor and the catalyst is formed in situ. In a final embodiment, the catalyst components may be introduced into one polymerization reactor and prepolymerized with one or more olefin monomers and subsequently contacted with additional olefin monomers, which may be the same or different from the olefin monomers used in the prepolymerization. The subsequent polymerization may take place in the same or in a different polymerization reactor and may include separate addition of one or more of the catalyst components during said subsequent polymerization.

In another embodiment, mixtures of starting components (such as ligands, organometal compounds, cocatalysts, polymerization modifiers, internal electron donors, external electron donors, additives, monomers, solvents, etc.) are combined in different ratios, orders, or methods. The polymerization is again performed under varying conditions to create a product library or array. In this embodiment the conditions of the polymerization process are variables that are combinatorialized. Suitable process conditions that may be combinatorialized include amounts and ratios of starting components, repetitions of process steps, purification (washing) and recovery of catalyst compositions, time allowed for catalyst formation, catalyst formation reaction temperature and pressure, rate of starting component addition to the reaction, residence time (or product removal rate), polymerization temperature, pressure and reaction atmosphere, mixing rate, and other conditions that those of skill in the art will recognize.

In addition, the foregoing embodiments can be combined together. For example, this invention may be practiced by having diversity in the starting components used; by having diversity in the reaction conditions used to form the catalyst library (such as time, temperature, mixing speed, or other conditions used in catalyst formation); by diversity in the polymerization conditions used; or by a combination of all the foregoing variables. The catalyst library is screened by measurement of catalyst productivity such as heat released or mass of polymer generated, or more preferably, consumption of one or more monomers. The polymer library is screened to determine if a polymer of interest has been created using conventional analysis techniques or one of many different rapid polymer characterization techniques.

For example, percent xylene solubles in polypropylene may be measured by use of ASTM method D 5492-98. This method determines the fraction of a polypropylene sample that is soluble in o-xylene at 25 °C. The soluble fraction has a good correlation to the quantity of the polymer that is amorphous. However, the ASTM method uses gravimetric analysis and requires approximately 2 g of sample and nearly 4 hours to complete. An alternate technique uses trichlorobenzene (TCB) at elevated temperatures (up to 150 °C) to treat the sample, smaller sample size (less than 50 mg), and is amenable to rapid IR absorption or refractive index analysis to quantify solubles content. The technique is an equally reliable indicator of amorphous polymer content as the xylene method. Moreover, the percent TCB solubles test may be automated through use of robotic manipulation, parallel filtration, and fast serial analysis to achieve rapid polymer screening, and may be linked to other rapid testing which also uses TCB as solvent, such as Gel Permeation Chromatography.

The embodiments of this methodology may be combined into a flexible system that includes a number of different stations including one or more stations for combining starting materials, daughtering the libraries, performing the reactions of interest, and screening the results of the process. The system includes a control system that controls, monitors and directs the activities of the system so that a user may design an entire series of experiments by inputting library design, screening, or data manipulation criteria.

Those of skill in the art will appreciate the variety of methods for creating diversity in the libraries of this invention. The screens are employed to determine if the diversity has produced a product or process of interest by directly measuring process parameters, thereby providing a quantifying means for evaluating the individual members of the library.

A further understanding of the nature and advantages of the present invention may be realized by reference to the remaining portions of the specification and the drawings.

### DETAILED DESCRIPTION

All reference to the Periodic Table of the Elements herein shall refer to the Periodic Table of the Elements, published and copyrighted by CRC Press, Inc., 2001. Also, any reference to a Group or Groups shall be to the Group or Groups as reflected in this Periodic Table of the Elements using the IUPAC system for numbering groups. The term "comprising" when used herein with respect to a composition, mixture, or process is not intended to exclude the additional presence of any other compound, component or step. Unless stated to the contrary, implicit from the context, or customary in the art, all parts and percents are based on weight.

If appearing herein, the term "comprising" and derivatives thereof is not intended to exclude the presence of any additional component, step or procedure, whether or not the same is disclosed herein. In order to avoid any doubt, all compositions claimed herein through use of the term "comprising" may include any additional additive, adjuvant, or compound, unless stated to the contrary. The term "consisting of", if used, excludes any component, step or procedure not specifically delineated or listed. The term "or", unless stated otherwise, refers to the listed members individually as well as in any combination.

A "library" as used in this invention has either chemical diversity or process diversity. Chemical diversity refers to a library having members that vary with respect to atoms or their arrangement in molecules or compounds. Process diversity refers to a library having members that may have begun with the same compounds, but experienced different processing conditions and are different as a result of those different processing conditions. Different processing conditions include varying the ratios of compounds and reagents, time of reaction, reaction temperature, reaction pressure, rate of starting component addition to the reaction, residence time (or product removal rate), reaction atmosphere, mixing rate, or other conditions that those of skill in the art will recognize. It is through the creation of libraries having diversity and the screening of such libraries for a property or compound of interest that a complete combinatorial research and development program may be undertaken for olefin polymerization reactions.

In particular, this invention provides methods for the synthesis of libraries of metal compounds, complexes, or mixtures by a variety of routes for evaluation as catalyst components. Additional components for the catalyst composition may be ordered as libraries or included as a constant or standardized reagent. Optional activation of those compounds, complexes or mixtures into activated catalyst libraries may be included as well, particularly when the activator is one of the variables to be studied or screened. After the precursor, procatalyst, catalyst, cocatalyst, and/or polymerization modifier libraries are prepared, the invention provides for screening of one or more thereof. Screening may be in, for example, a series of individual polymerization reactors that provides detailed information about catalytic activity and kinetics under a variety of reaction options and conditions, including monomer and comonomer choice, solvent, pressure, temperature, stirring rate, volume, stoichiometric relationships, and order of addition of chemicals. Thus, one may chose to "combinatorialize" any of the polymerization reaction conditions for a single or for multiple libraries. By this is meant that individual members of the various libraries are combined and optionally subjected to one or more process steps to ultimately form a catalyst composition which is tested for olefin polymerization properties, polymer properties or other catalyst performance properties. "Combinatorialization" of polymerization conditions can be used to screen for optimal process conditions. This addition polymerization combinatorial process may include a primary screen prior to screening in the individual polymerization reactors. A primary screen may, for example, comprise an optical screen under polymerization conditions that simply determines which members of the catalyst library have any activity. Another optional step is to further characterize the resultant polymers formed in the polymerization reactor. Such further screening may employ a rapid liquid chromatography and/or light scattering system, or determine the chemical, physical or mechanical properties of the resultant polymers.

The members of a precursor library, procatalyst library, catalyst library or product library are typically stored or provided in a spatially addressable format, meaning that each compound or mixture is separated from the others, in a liquid or solid form, preferably in a liquid form such as a solution or slurry, and retained in a sealed vial. Due to the reactivity or affinity of many of the components, reagents or solvents employed in forming the various libraries with air or moisture, the individual vials, all reaction vessels, and even the entire combinatorial apparatus are preferably retained under inert atmospheric conditions.

One option for the creation of the procatalyst library may include manufacturing stock supplies of the precursor, procatalyst, cocatalyst or polymerization modifier libraries, so that each member of the catalyst library is made of the same parent library members by means of different reactions or under different reaction conditions or by combination with different catalyst activators or modifiers. In a preferred embodiment, the precursor library, procatalyst library, catalyst library, catalyst activator library, and polymerization modifier library are provided in a liquid form, for example with each compound stored in a separate vessel, preferably in dilute form or as a slurry in a liquid such as a hydrocarbon, halocarbon or halohydrocarbon. Preferably, the compounds or mixtures comprising the parent library are stored in vials having a septum or other sealing mechanism that can be penetrated by a needle that may be on a robotic arm of known liquid handling robots.

A catalyst library may be formed from various combinations of the other libraries or standards to thereby form an array. In a preferred embodiment, at least one member from the precursor library or procatalyst library is combined with at least one cocatalyst. More typically, at least one polymerization modifier is present as well. Highly desirably the libraries are combined and reaction conditions varied so as to form at least 8, preferably at least 24, more preferably at least 32, and most preferably at least 48 catalyst library members or polymerization process members of the resulting array.

In some embodiments, the various compounds, especially polymerization modifier components, may be combined without determination of the product of such combination, or if, in fact, a product forms at all. The precursor, procatalyst or catalyst compound may be added to the reaction vessel at the same time or sequentially. They may be added before or along with any additional reactants used in the reaction of interest. Alternatively, some or all of the compounds may be prereacted or combined and recovered or purified prior to use in a subsequent process. As such, the result of the combination need not be determined.

The product library (procatalyst, catalyst or polymer) has different members resulting from combinatorializing the process variables in the reaction of interest. Process variables that may be combinatorialized include the types, amounts, and ratios of starting components, time for reaction, reaction temperature, reaction pressure, rate and/or method of starting component addition to the reaction (or reactor), residence time (_that is, rate and/or method of product removal from the reaction or reactor), reaction stir rate and/or method, reaction kill rate and/or method, reaction atmosphere, and other conditions that those of skill in the art will recognize.

Therefore, those of skill in the art will appreciate the vast number of different possible combinations of precursors, modifiers, activators, or other starting components may be combined together to form the catalyst libraries. In addition, this combination methodology may be combined with combinations of various reaction conditions, including different starting component ratios, different temperatures, solvents, pressures, mixing rates, times, order of addition of chemicals or atmospheres to form vastly different product libraries.

In the methodology of this invention, a library is screened for a property or compound of interest. The screening takes place as the reaction of interest is being performed, that is, in real time. As used herein, "screening" refers to testing a library for a desired property by measurement of one or more product or process variables, preferably one or more process variables under addition polymerization conditions. A screen of one or more process variables may be combined with the evaluation of product properties of interest, if desired. For example, polymerization reactions performed in a polymerization reactor, especially a solution polymerization reactor, can be evaluated by monomer consumption, temperature evolution, and/or pressure-, viscosity-, particle size-, or color- change, and these results individually or collectively correlated with catalyst performance or one or more polymer properties. Examples of suitable polymer properties that may be so correlated with the on-line process data include molecular weight, molecular weight distribution, comonomer content, crystallinity, melting point, melt index, tacticity, solubility, density, etc. However, due to the fact that such product properties are only ascertainable after completion of the polymerization and are subject to possible variability due to any ensuing time delay and change in environment, the use of process variables as the primary screen results in a preferred and highly reliable method for analysis in combinatorial addition polymerization research.

Each of the three types of libraries may be stored in a liquid or solid state and retrieved from storage for combining, daughtering, running in the reaction of interest, screening, or combinations thereof. Libraries are preferably stored in a storage rack that holds the libraries separately from each other. Libraries may be retrieved from storage either manually or automatically, using known automated robots. Specific robots useful for retrieving such stored libraries include systems such as those marketed by Aurora Biosciences or other known robotic vendors. If the libraries are stored in the solid phase, the members typically require dissolution or slurrying, which may be performed at a dissolution or slurrying station, or if sufficient volume is provided for library storage, in the vessel or chamber holding the sample. A dilution station is a location where the library members are dissolved in a suitable solvent and then further transported for use in either the reaction of interest or in a screen. Alternatively, solid materials can be manipulated using a robotic solid dosing unit.

Each of precursor, procatalyst or catalyst libraries may be converted into one or more daughter libraries through formation of arrays. A daughter library is created from the parent library by taking one or more aliquots from one or more members in the parent library, and optionally treated to differing conditions than the parent library or otherwise converted, to form a second library. A limited number of members of the parent library may be daughtered in this manner, or all the members may be daughtered at least once to create a daughter library. Thus, a daughter library may be smaller or larger than the parent library in terms of both the number of members and the sample size. Daughtering is performed in order to provide multiple libraries for multiple reactions of interest or multiple screens without having to recreate the parent library.

Optionally a filtering station is provided. The filtering station is useful to filter off solid phase agents or products from liquid products or precursors. For example, if solid-phase by-products form, such a station will allow for separation of any liquid phase components in a filtering step. Desirably, the filtering station can be used multiple times by restoring original process conditions after each filtration.

A filtering station provides for ease in the synthesis of the procatalysty and catalyst libraries. The precursors and procatalysts may be provided in the solid phase in a single reactor, while various reagents, solvents and polymerization modifiers are combined and excess reagents or by-products removed. This technique generally allows for the use of an excess of any reagent or solvent, ease of purification or work-up, and automation of the process.

Suitable techniques for screening useful herein include infrared (IR) thermography or Fourier Transform Infrared (FTIR) spectroscopy or visible light or other optical viewing as disclosed in WO 98/15815 or WO 98/15805. Using an optical technique typically entails inserting the starting materials (_for example, catalyst library member with reactants or initiator with monomer) in an array format into a chamber (for example, a vacuum chamber or a chamber pressurized with reactant monomer or a chamber pressurized with an inert gas). The reaction of interest is performed in parallel in the chamber using a plate having multiple wells for the catalyst members or starting materials for the product members (such as a microtiter plate, for example). The chamber has a window allowing access to the optical camera (_for example, calcium fluoride or sapphire crystal for an IR camera). As the reaction of interest is carried out, the reaction is monitored. For example, an IR camera or thermocouple may record heat released by the reaction. A preferred method for monitoring a process conditions is the measure of monomer consumption, typically by measuring flow of one or more monomers into an otherwise sealed reactor or the pressure decrease with time within a sealed reactor operating under polymerization conditions.

Additional suitable reactors are those that include the ability to combinatorialize certain process variables, such as temperature, time, feed rate, mixing rate, etc. Of course, the reactants, catalysts, initiators, etc. can also be modified or combined in different amounts in addition to or instead thereof, as previously disclosed.

Other techniques for screening the various libraries herein may be known or developed by those of skill in the art for specific reactions of interest. Any of the foregoing screens may be used as a primary screen, which serves to quickly eliminate some of the members a libraries or daughter catalyst library, thereby eliminating the need for further, more detailed testing.

As used herein a "station" is a location in the apparatus that performs one or more functions. The functions may be combining the starting components, creating a product library via a reaction, screening, purifying, separating, or performing any of the other functions discussed above. Thus, the station may comprise a liquid or solid handling robot with pumps and computers (as known in the art) to dispense, dissolve, mix and/or move liquids or solids from one container to another.

The station may comprise any of the reactors discussed above, and may be remotely located from the remainder of the apparatus, such as in an inert atmosphere glove box, if desired. A station may also perform multiple functions, optionally separated by cleaning, reconditioning or resetting if desired.

Because of the wide applicability of this invention to a broad variety of polymerization conditions, a combinatorial approach can be used to identify optimum precursors, procatalysts, catalysts, and catalyst compositions for use in addition polymerization reactions. An advantage to the present combinatorial approach is that the choice of precursor, procatalyst, catalyst, and catalyst compositioncan be tailored to specific polymerization conditions.

The scale of the polymerizations employed in the present screening operations preferably employs precursors, procatalyst or catalyst compositions in an amount from 0.01 µg to 1.0 g, more preferably between one 0.1 µg to 0.1 g, although the scale can be modified as desired depending on the equipment used. Those of skill in the art can readily determine appropriate sets of reactions and reaction conditions to generate and/or evaluate the libraries of interest.

The members of the various libraries can be laid out in a logical or a random fashion in multi-tube arrays or multi-well plates, preferably in the form of an array. Preferably, the liquids are dilute solutions or slurries of the compound or mixture of interest. In a preferred embodiment, an A×B array is prepared, with various combinations of precursor, procatalyst or catalyst of interest. However, it is also possible to evaluate a single precursor, procatalyst or catalyst with a plurality of polymerization modifiers, cocatalysts, or other additives, optionally at different polymerization temperatures, concentrations, pressures, monomers, or other reaction conditions, and then repeat the process as desired with a plurality of different subject compounds.

The performance of the particular combination of library member, reagent, or process condition under the reaction conditions of interest is measured and correlated to the specific combination tested. Adjustments to the data to compensate for non-standard conditions, systematic variation, or other variable can be applied. In addition, statistical analyses may be performed to manipulate the raw data and determine the presence of unexplainable data variation. The array can be ordered in such a fashion as to expedite synthesis and/or evaluation, to maximize the informational content obtained from the testing, to facilitate the rapid evaluation of such data, or to minimize data variation, if desired. Methods for organizing libraries of compounds are well known to those of skill in the art, and are described, for example, in U S. Patent 5,712,171. Such methods can be readily adapted for use with the compounds and process parameters described herein.

By screening multiple synthetic variations of a precursor, procatalyst, catalyst or catalyst composition, the selection of the optimal candidate is rapidly determined. The desired physical and chemical properties for the various library or daughter library members can be rapidly optimized, and directly correlated with the chemical or physical changes within a particular array or sub-array.

The polymerizations using the various members in the libraries generally involve contacting appropriate mixtures thereof under polymerization conditions in the tubes or wells in a multi-tube rack or multi-well plate, and allowing the addition polymerization reaction to take place while monitoring one or more process variables, especially heat evolution or monomer consumption. Because of the ease and accuracy of monitoring gaseous flow, ethylene consumption in the polymerization of interest, optionally correlated with heat evolution, is the most desired process variable for screening herein. Secondary screening of polymer properties, especially tacticity, molecular weight, or comonomer composition are further optionally correlated with the process data according to the present invention.

Robotic arms and multi-pipette devices are commonly used to add appropriate reagents to the appropriate polymerization reactors, such as the tubes in multi-tube racks, or wells in multi-well plates. Alternatively, but less desirably, a common polymerization reactor can be employed sequentially to conduct the subject polymerizations. The tubes are desirably covered with a rubber septum or similar cover to avoid contamination, and the reagents added via injection through a needle inserted through the cover. Suitable process equipment for the foregoing operations has been previously disclosed in US-B-6,030,917, US-B-6,248,540 and EP-A-978,499;

In one embodiment, the polymerizations are carried out via computer control. The identity of each of the compounds of the library can be stored in a computer in a "memory map" or other means for correlating the data regarding the polymerizations. Alternatively, the chemistry can be performed manually, preferably in multi-tube racks or multi-well plates, and the information stored, for example on a computer.

Any type of multi-well plate or multi-tube array commonly used in combinatorial chemistry can be used. Preferably, the number of wells or tubes is in excess of 30, and there is a tube in at least 60 percent of the positions in each multi-tube array. The shape of the rack is not important, but preferably, the rack is square or rectangular. The tubes can be made, for example, from plastic, glass, or an inert metal such as stainless steel. Because of the relatively high temperatures employed in the synthesis of Ziegler-Natta catalyst compositions, desirably in excess of 80 °C more preferably in excess of 90 °C, glass or metal, preferably stainless steel reactors are preferably employed.

Any type of liquid handler that can add reagents to, or remove reagents from, the wells and/or tubes can be used. Many involve the use of robotic arms and robotic devices. Suitable devices are well known to those of skill in the art of combinatorial chemistry. The individual cells are also desirably equipped with or accessible by a filter means through which liquid reagents, products or by-products can be removed, leaving solid products or reagents in the cell. Isolation of polymer products can be accomplished using commercially available centrifugal devolatilizers or evaporators, and needn't be part of the automated procedures of the process.

Any device that can take samples from the polymerization reactor(s) and analyze the contents can be used for product screening. Examples include chromatographic devices, such as an analytical or preparative scale high performance liquid chromatography (HPLC), GC or column chromatography. For analysis of polymer properties simple solution viscosity, melt viscosity, ¹H NMR, ¹³C NMR, FTIR, xylene solubility (XS) studies, or other common analytical techniques may be employed for determination of polymer properties.

Preferably, in those embodiments in which a chromatographic column (HPLC, GC or column chromatography) is used, the device has the ability to identify when the compound of interest is eluting from the column. Various means have commonly been used to identify when compounds of interest are eluting from a column, including ultraviolet (UV), infrared (IR), thin layer chromatography (TLC), gas chromatography-mass spectrometry (GC-MS), flame ionization detector (FID), nuclear magnetic resonance (NMR), evaporative light scattering detector (ELSD), and nitrogen detection. Any of these means, and others known to those of skill in the art, can be used, alone or in combination.

The invention preferably includes a computer system capable of storing information regarding the identity of the compounds and mixtures in the libraries and the product streams obtained from the polymerizations. Software for managing the data is stored on the computer. Relational database software can be used to correlate the identity of the compounds employed in each polymerization and the results. Numerous commercially available relational database software programs for this purpose are available and known to the skilled artisan. Although relational database software is a preferred type of software for managing the data obtained during the processes described herein, any software that is able to create a "memory map" of the test compounds and correlate that information with the information obtained from the polymerizations can be used.

### Polymerization Modifiers

The procatalyst composition serves as one component of a Ziegler-Natta catalyst composition, in combination with a cocatalyst, optionally a selectivity control agent, and optionally one or more polymerization modifiers. The polymerization modifier is preferably employed in a molar ratio based on titanium in the procatalyst from 0.1:1 to 1000:1, but more preferably in a molar ratio from 1:1 to 500:1.

The olefin polymerization catalyst is produced by any suitable procedure of contacting the procatalyst, cocatalyst and optional SCA and polymerization modifier(s). The method of contacting is not critical. The catalyst components or combinations thereof can be precontacted prior to polymerization to form a preactivated catalyst, and optionally stored as an additional library herein, or the components can be contacted simultaneously with contact with an olefin monomer in a suitable reactor. In one modification, the catalyst components simply are mixed in a suitable vessel and the preformed catalyst thereby produced is introduced into the polymerization reactor when initiation of polymerization is desired for purposes of catalyst screening. In an alternate modification, the catalyst components are separately introduced into the polymerization reactor and the catalyst is formed in situ. In a final embodiment, the catalyst components may be introduced into one polymerization reactor and prepolymerized with one or more olefin monomers and subsequently contacted with additional olefin monomers, which may be the same or different from the olefin monomers used in the prepolymerization. The subsequent polymerization may take place in the same or in a different polymerization reactor and may include separate addition of one or more of the catalyst or polymerization reaction components during said subsequent polymerization.

The polymerization modifiers for use in the present invention in one embodiment may comprise the reaction product of at least two reagents, especially one or more metal containing Lewis acids with one or more organic protonating reagents. It should be appreciated by one of skill in the art that the resulting product may contain a mixture of species, including equilibria between various species and dynamic, interconverting compounds. In one embodiment of the invention, the reaction mixture formed upon combining the foregoing reagents in a suitable diluent, preferably a hydrocarbon such as hexane or heptane is preferred for use, rather than the purified and/or isolated reaction product itself.

Suitable Lewis acids are compounds of the formula: [M⁴A¹ₓ,G_{y'}]_{z'}, wherein:
M⁴ is a metal of Groups 2-13, Ge, Sn, or Bi;
A¹ is independently an anionic or polyanionic ligand;
x' is a number greater than zero and less than or equal to 6;
G is a neutral Lewis base, optionally bound to A¹;
y' is a number from 0-4;
z' is a number from 1 to 10.

Preferably, the Lewis acids are metal compounds of the general formula: M⁴A¹_{x'}G_{y'}, wherein M⁴ is a metal of Groups 2-13, Ge, Sn, or Bi; A¹ is independently an anionic ligand; x' is an integer and is equal to the valence of M⁴; G is a neutral Lewis base; and y' is a number from 0-4. More preferably, M⁴ is Mg, B, Ga, Al, or Zn; A¹ is C₁₋₂₀ hydrocarbyl or inertly substituted hydrocarbyl, especially C₁₋₁₂ alkyl or aryl. Preferred inert substituents include halide, trimethylsilyl, haloaryl, and haloalkyl. Most highly preferably, M⁴ is aluminum.

The protonating reagents used in the present invention to form polymerization modifiers include compounds of the formula: [(H-J¹)_{z"}A²]_{z'''}, wherein:
J¹ is NA³, PA³, S, or O,
z" is 1 or 2,
A² is C₁₋₂₀ hydrocarbyl or inertly substituted hydrocarbyl, tri(C₁₋₁₀hydrocarbyl)silyl, or a polyvalent derivative thereof,
A³ is hydrogen, C₁₋₂₀ hydrocarbyl or inertly substituted hydrocarbyl, or a covalent bond (when A² is a divalent ligand group and z" is one); and
z"' is a number from 1 to 10.

Preferred protonating reagents include compounds of the formula: (H-J¹)_{z"}A², wherein J¹ is NA³, PA³, S, or O, and z" is 1 or 2; and A² is C₁₋₂₀ hydrocarbyl or inertly substituted hydrocarbyl, tri(C₁₋₄hydrocarbyl)silyl, or a divalent derivative thereof, especially C₁₋₁₂ alkyl, 1,4-butylene, tri(C₁₋₄ alkyl)silyl, or aryl, and A³ is hydrogen, C₁₋₂₀ hydrocarbyl or inertly substituted hydrocarbyl, or a covalent bond. Preferred inert substituents are halide, trimethylsilyl, haloaryl, or haloalkyl.

Especially desired polymerization modifiers for use according to the present invention are the reaction products of tri(C₁₋₂₀alkyl)hydroxysilanes, dihydrocarbylamines, alcohols, or inertly substituted derivatives thereof, with trihydrocarbylaluminum compounds, especially tri(C₁₋₂₀alkyl)aluminum compounds, most especially tri(C₁₋₈ n-alkyl)aluminum compounds. Highly desirably, the polymerization modifiers are the corresponding bis(siloxy)alkylaluminum derivatives, bis(alkoxy)alkylaluminum derivatives, bis(aryloxy)alkylaluminum derivatives, bis(amino)alkylaluminum derivatives, or mixtures thereof. The skilled artisan will appreciate that the actual reaction mixture comprises an equilibrium of possible products, of which the foregoing comprise one component.

Another class of polymerization modifiers are organic or inorganic compounds, especially aliphatic esters and diesters of (poly)carboxylic acids and ether derivatives thereof, that limit or reduce catalyst activity at elevated polymerization temperatures. Desirably, such compounds, referred to herein as activity limiting agents or ALA's, do not adversely affect the polymerization process or resulting polymer products, and may in fact, beneficially affect the same. Such compounds are employed to reduce or eliminate reactor upsets, fouling, or other operational problems due to temperature excursions in the reactor.

Preferred ALA compounds generally are selected from aliphatic and cycloaliphatic monocarboxylic and polycarboxylic acids containing from 2 to 50 carbons, C₁₋₅₀ alkyl-, C₆₋₅₀ aryl- or C₃₋₅₀ cycloalkyl- esters or polyesters of aliphatic and cycloaliphatic mono- and poly- carboxylic acids containing from 3 to 500 carbon atoms in total, inertly substituted derivatives thereof, and mixtures of the foregoing. Suitable inert substituents include aliphatic, cycloaliphatic, and aromatic substituents optionally containing one or more heteroatoms from Groups 14-17 of the Periodic Table of the Elements. Examples of such substituents include halo, alkyl, alkenyl, cycloalkyl, aryl, alkaryl, aralkyl, (poly)alkylether, cycloalkylether, arylether, aralkylether, alkarylether, alkylthioether, arylthioether, dialkylamine, diarylamine, diaralkylamine, trialkylsilyl, (trialkylsilyl)alkyl, carboxylic acid, carboxylic acid ester, polyvalent derivatives of the foregoing, and mixtures thereof.

Preferred are C₁₋₂₀ alkyl esters of aliphatic mono- and dicarboxylic acids wherein the alkyl group is unsubstituted or substituted with one or more Group 14, 15 or 16 heteroatom containing substituents, more preferred are C₁₋₄ alkyl mono- and diesters of aliphatic C₄₋₂₀ monocarboxylic acids and dicarboxylic acids, especially C₁₋₄ alkyl esters of aliphatic C₈₋₂₀ monocarboxylic acids and dicarboxylic acids, and C₂₋₂₀ alkyl mono- or polycarboxylate derivatives of C₂₋₁₀₀ (poly)glycols or C₂₋₁₀₀ (poly)glycol ethers. Especially preferred ALA's include ethyl acetate, methyl trimethylacetate, isopropyl myristate, di-n-butyl sebacate, (poly)(alkylene glycol) mono- or diacetates, (poly)(alkylene glycol) mono- or di-myristates, (poly)(alkylene glycol) mono- or di-laurates, (poly)(alkylene glycol) mono- or di- oleates, glyceryl tri(acetate), and mixtures thereof.

An especially preferred combination of SCA/ALA components is a mixture of an alkoxy silane selected from the group consisting of dicyclopentyldimethoxysilane, methylcyclohexyldimethoxysilane, and n-propyltrimethoxysilane with an ester which is isopropyl myristate, di(n-butyl) sebacate, (poly)(ethylene glycol) monolaurate, (poly)(alkene glycol) dioleate, (poly)(ethylene glycol) methyl ether laurate, glyceryl tri(acetate), or a mixture thereof.

By using a polymerization modifier according to the present invention, one or more process or product properties is beneficially affected. Additional examples besides the foregoing activity limiting properties, include the ability to prepare copolymers of propylene and one or more comonomers, especially 1-butene, 4-methyl-1-pentene, 1-hexene, 1-octene or styrene, having higher comonomer incorporation at equivalent polymerization conditions or alternatively, preparing equivalent copolymers at higher polymerization temperatures or lower comonomer concentrations in the reaction mixture. Another beneficial feature of the use of the present polymerization modifiers may be greater selectivity in product formation as determined by increased molecular weight (Mw), narrower molecular weight distribution (Mw/Mn) of homopolymer and copolymer products, or a relative lack of formation or reduction in formation of a particular species, such as a polymer fraction having differentiated crystallinity, solubility, tacticity, melting point, melt flow index, or other physical property. A further desirable result of the use of the present polymerization modifiers may be improved process properties such as greater activity, or improved monomer conversion efficiency. In another embodiment, suitable cocatalyst materials may be evaluated based on performance under non-standard reaction conditions. For example, due to specific reactants or impurities in a reagent or monomer source, polymerization efficiency may be adversely affected by the use of previously known polymerization modifiers. Examples include the use of comonomer, especially 1-octene, prepared by gasification (reaction of an H₂/H₂O mixture) with coal, peat, cellulose, or other carbon source and fractionation of the resulting mixture.

In another embodiment of the invention, a mixture of polymerization modifiers can be employed to obtain a mixture of polymer properties or to maximize the benefits of individual catalyst compositions. For example, quantities of standard cocatalysts, especially trialkylaluminum compounds may be employed in combination with the polymerization modifiers of the present invention to obtain a broader molecular weight distribution polymer, including a bimodal molecular weight distribution product, or to obtain a small quantity of a high comonomer containing polymer intimately mixed within a matrix of a low comonomer content polymer, thereby forming desirable blends of polymers merely through altering the polymerization modifier mixture employed in the reaction or in separate reactors used in the polymerization.

It is to be understood that the above description is intended to illustrative and not restricted. Many embodiments will be apparent to those of skill in the art upon reading the above description. The scope of the invention should, therefore, be determined not with reference to the above description, but should instead be determined with reference to the appended claims, along with the full scope of equivalents to which such claims are entitled.

### EXAMPLES

### Procatalyst Library Preparation:

All glassware is dried at 110°C for a minimum of two hours prior to transferring to a dry box. All reagents and solvents are purified and dried prior to use using published techniques. All preparations were performed in a Nexus^{™} brand drybox (available from Vacuum Atmospheres Corporation). All work is performed under inert atmosphere using a Chemspeed^{™} Automated Synthesis Workstation model ASW1000 (available from Chemspeed, Inc.).

An array of 16 individual reactor vessels (cells) each having 8 ml working volume is used to prepare the procatalyst library. Each cell is was equipped with a reflux condenser having integrated therein a fritted filter stick. The catalyst library is prepared by combining 300 mg of a solid precursor mixture of magnesium and titanium alkoxides having an approximate formula Mg₃Ti(OC₂H₅)₈Cl₂, introduced as a suspension in monochlorobenzene (MCB), via automated robotic syringe through a seal covering each cell. The precursor is then contacted with 6 mL of a mixture of TiCl₄ and monochlorobenzene in a 1/1 volume ratio, in the presence of 40 µL ethyl benzoate (EB) internal electron donor, at 100°C for one hour, followed by filtration through the filter stick. The filtrate is discarded and the solid remaining in each cell is preserved. This halogenation step is repeated two more times. In the second halogenation 50 µL benzoyl chloride is substituted for the ethyl benzoate. In the third halogenation 40 µL benzoyl chloride is substituted for the ethyl benzoate. Five washes at 20 °C with 3 mL dried isooctane (iC8) each followed by filtration through the filter stick are performed to remove residual TiCl₄. The finished dried compositions are transferred to sealed glass containers to form a procatalyst library resulting from the combinatorializing of the internal donor, the halogenation temperature, and other process conditions. Compositional analyses of the resulting procatalysts are summarized in Table 1.

**Table 1**

| procatalyst | Ti % | Mg % | Cl % | OEt % | iC8 % | MCB % | EB % |
|---|---|---|---|---|---|---|---|
| 1 | 3.01 | 19.77 | 60.44 | 0.20 | 1.77 | 4.26 | 15.03 |
| 2 | 3.26 | 18.62 | 59.30 | 0.13 | 2.57 | 2.59 | 16.22 |
| 3 | 3.03 | 17.82 | 61.41 | 0.14 | 2.50 | 2.22 | 15.23 |
| 4 | 2.93 | 17.09 | 60.12 | 0.12 | 2.74 | 1.99 | 16.25 |
| Average | 3.1 | 18.3 | 60.3 | 0.15 | 2.4 | 2.8 | 15.7 |
| STD Dev | 0.14 | 1.15 | 0.87 | 0.04 | 0.43 | 1.03 | 0.64 |

A second procatalyst library is prepared by substantially repeating the foregoing reaction conditions. In the preparation of the second procatalyst library the halogenations are conducted at 115°C for one hour. Diisobutyl phthalate (DIBP) internal electron donor is added in the first halogenation step only. No benzoyl chloride is used in subsequent halogenations. Compositional analyses of the resulting procatalysts are summarized in Table 2.

**Table 2**

| procatalyst | Ti % | Mg % | Cl % | OEt % | iC8 % | MCB % | DIBP% |
|---|---|---|---|---|---|---|---|
| 5 | 2.47 | 16.25 | 56.57 | 0.13 | 2.82 | 0.14 | 9.54 |
| 6 | 2.42 | 17.11 | 57.09 | 0.11 | 2.39 | 0.12 | 7.82 |
| 7 | 2.56 | 19.08 | 62.71 | 0.23 | 3.00 | 0.20 | 10.47 |
| 8 | 2.45 | 18.64 | 62.92 | 0.14 | 2.54 | 0.40 | 9.10 |
| Average | 2.5 | 17.8 | 59.8 | 0.15 | 2.7 | 0.2 | 9.2 |
| STD Dev | 0.06 | 1.32 | 3.46 | 0.05 | 0.27 | 0.13 | 1.10 |

A third procatalyst library is prepared by substantially repeating the foregoing reaction conditions. In this preparation the halogenations are conducted at 115°C for one hour, 30 minutes and 30 minutes respectively. For procatalysts 9-12, diisobutyl phthalate internal electron donor (65 µL) is added in the first halogenation step only. For procatalysts 13-14, diisobutyl phthalate internal electron donor (32 µL) is added in the first and second halogenation steps only. For procatalysts 15-16, 1-ethoxy-2-n-pentoxybenzene (CATEPE) internal electron donor (120 µL) is added in all three halogenation steps. No benzoyl chloride is used in any halogenations. Preparation steps for procatalysts 9-16 are summarized in Table 3.

**Table 3**

| procatalyst | 1 halogenation ED | 2^{nd} halogenation | 3^{rd} halogenation |
|---|---|---|---|
| 9 | DIBP 65 µL | - | - |
| 10 | DIBP 65 µL | - | - |
| 11 | DIBP 65 µL | - | - |
| 12 | DIBP 65 µL | - | - |
| 13 | DIBP 32 µL | DIBP 32 µL | - |
| 14 | DIBP 32 µL | DIBP 32 µL | - |
| 15 | CATEPE 120 µL | CATEPE 120 µL | CATEPE 120 µL |
| 16 | CATEPE 120 µL | CATEPE 120 µL | CATEPE 120 µL |

### Example 1

### Propylene Polymerization

In a drybox under a nitrogen atmosphere with oxygen and water content below 1 ppm, 250 µl of each of procatalysts 8, 9 and 11-16 (slurried in mixed alkanes solvent) is transferred to a preweighed 6 ml vial where the diluent is removed at room temperature under vacuum. After 30 min. the vial is reweighed to obtain the actual weight of procatalyst. A 6 mm Teflon^{™} stirbar is added and the procatalyst ground to break up the procatalyst particles. The resulting procatalyst powder is reslurried in toluene to give a concentration of 0.4095 mg/ml. Each procatalyst is tested for propylene polymerization under equivalent reaction conditions in a 48 cell automated parallel reactor containing 8 ml glass vial lined reactors (available from Symyx Technologies, Inc.) operated remotely in a dry box to avoid generation of HCl.

To each of the 48 wells in the reactor is added mixed alkanes: 5394 µl (5515 µl for reactions 1E,F, 2E,F and 3E,F); triethylaluminum, 0.2 M in mixed alkanes: 165 µl (110 µl for reactions 1E,F, 2E,F and 3E,F); and dicyclopentyldimethoxysilane external donor, 0.01 M in mixed alkanes: 198 µl (132 µl for reactions 1E,F, 2E,F and 3E,F).

The reactors are then pressurized with H₂ at 10 psig (175 kPa) followed by propylene gas at 100 psig (800 kPa) and brought to 67 °C and maintained at that temperature. The catalyst slurries are then injected into each cell. Propylene/hydrogen is fed on demand to the reactor cell to maintain a pressure of 100 psig (800 kPa). The polymerization reaction is allowed to continue for 3600 seconds or until reaching a conversion of 150 percent, at which time the reaction is terminated by flooding the cell with CO₂ gas. After completion of the entire 48 well array, the cells are removed from the reactors, the solvent removed and the yield of polymer formed determined by increase in cell weight. Productivity results, expressed as kg polymer/g procatalyst hour for selected procatalysts prepared above are shown in Table 4.

**Table 4 Catalyst Productivities**

| | 1 | 2 | 3 | 4 | 5 | 6 | Averages |
|---|---|---|---|---|---|---|---|
| A | procat 15 10.34 | procat 15 9.34 | procat 15 7.10 | procat 16 8.25 | procat 16 17.30 | procat 16 19.25 | procat 8 6.95 |
| B | procat 15 12.95 | procat 15 10.04 | procat 15 9.82 | procat 16 19.41 | procat 16 22.25 | procat 16 20.15 | procat 9 9.61 |
| C | procat 13 10.26 | procat 13 15.11 | procat 13 12.20 | procat 14 4.38 | procat 14 5.05 | procat 14 4.25 | procat 11 10.53 |
| D | procat 13 12.84 | procat 13 14.71 | procat 13 12.86 | procat 14 3.97 | procat 14 2.97 | procat 14 4.00 | procat 14 8.42 |
| E | procat 8 7.66 | procat 8 6.61 | procat 8 6.26 | procat 9 8.10 | procat 9 10.77 | procat 9 10.33 | procat 13 12.30 |
| F | procat 8 5.90 | procat 8 9.40 | procat 8 5.84 | procat 9 9.32 | procat 9 9.30 | procat 9 9.80 | procat 14 4.10 |
| G | procat 11 10.79 | procat 11 12.49 | procat 11 9.00 | procat 12 8.47 | procat 12 8.92 | procat 12 8.98 | procat 15 9.93 |
| H | procat 11 10.95 | procat 11 10.85 | procat 11 9.07 | procat 12 7.06 | procat 12 8.65 | procat 12 8.41 | procat 16 17.77 |

### Example 2

### Polymerization Modifier Evaluation:

A library of compounds for testing as polymerization modifiers (additives for modification of one or more polymer properties or polymerization properties) is prepared by robotic synthesis using the equipment and techniques of Example 1. Candidate polymerization modifiers are prepared by combining either one or two equivalents of a Lewis acid reagent (B) with various proton source reagents (A) in a hydrocarbon diluent, typically hexane or heptane, to generate a library of compounds for further screening. A total of 96 compounds are prepared and evaluated under propylene solution polymerization conditions. Selected pairs of reagents that are used to prepare polymerization modifiers are identified in Table 5. The products are the corresponding stoichiometric reaction products, excepting for (B3)₃Al₂ (a product with 3 B groups to 2 A groups) which resulted upon combining two equivalents of B3 with one equivalent of A1.

**Table 5**

| | Al(Et)₃ **A1** | | 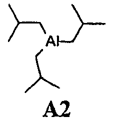 | | 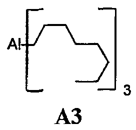 | |
|---|---|---|---|---|---|---|
| | 1:1 | 2:1 | 1:1 | 2:1 | 1:1 | 2:1 |
| 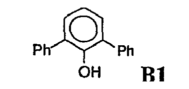 | B1A1 | B1₂A1 | B1A2 | B1₂A2 | B1A3 | B1₂A3 |
| 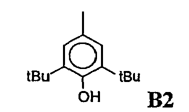 | B2A1 | B2₂A1 | B2A2 | B2₂A2 | B2A3 | B2₂A3 |
| Ph₂NH, B3 | B3A1 | B3₃A1₂ | B3A2 | B3₂A2 | B3A3 | B3₂A3 |
| 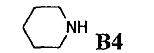 | B4A1 | B4₂A1 | B4A2 | B4₂A2 | B4A3 | B4₂A3 |
| (benzyl)₂NH **B5** | B5A1 | B5₂A1 | B5A2 | B5A2 | B5A3 | B5₂A3 |
| (Me₃Si)₂NH **B6** | B6A1 | B6₂A1 | B6A2 | B6₂A2 | B6A3 | B6₂A3 |
| Ph-OH, **B7** | B7A1 | B7₂A1 | B7A2 | B7₂A2 | B7A3 | B7₂A3 |
| t-Bu-OH, **B8** | B8A1 | B8₂A1 | B8A2 | B8₂A2 | B8A3 | B8₂A3 |
| 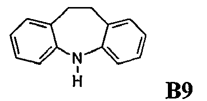 | B9A1 | B9₂A1 | B9A2 | B9₂A2 | B9A3 | B9₂A3 |
| (t-Bu)(Me)₂SiOH **B10** | B10A1 | B10₂A1 | B10A2 | B10₂A2 | B10A3 | B10₂A3 |
| HN(n-C₅H₁₁)₂ **B11** | B11A1 | B11₂A1 | B11A2 | B11₂A2 | B11A3 | B11₂A3 |

The polymerization conditions of Example 1 are substantially repeated. The procatalyst is prepared by slurrying a mixture of a magnesium diethoxide and titanium ethoxide/chloride containing precursor corresponding to the formula Mg₃Ti(OC₂H₅)₈Cl₂ (made substantially according to US-A-5,077,357) with diisobutyl phthalate internal electron donor (0.2 liter/kilogram precursor) in a 50/50 (vol/vol) mixture of TiCl₄/monochlorobenzene (MCB, 19 liters/kilogram precursor). After the mixture is heated at 113°C for 60 minutes, it is filtered. The resulting moist mass is slurried in a 50/50 TiCl₄/MCB mixture (19 liters/kilogram precursor) at 113°C for 30 minutes, filtered, and the process repeated once more. The resulting procatalyst containing 2.6 percent Ti is rinsed with isopentane, dried, ground, and sieved prior to use in polymerizations. The parallel pressure reactor (PPR) is equipped with rapid trichlorobenzene weight percent solubility determination (TBS). The polymerization modifier is tested in combination with triethylaluminum cocatalyst in a molar ratio Ti/TEA/PM of 1/100/400. Results are contained in Table 6 where the relative efficiency compared to a control polymerization made using only TEA at a molar ratio Ti/Al of 1/500 is the first number provided with TBS, where measured, provided in parenthesis. The corresponding TBS for the control polymer is 3.15.

**Table 6 Propylene Polymerization Results**

| | Al(Et)₃ **A1** | | 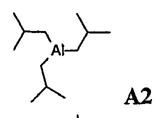 | | 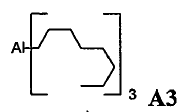 | |
|---|---|---|---|---|---|---|
| | 1:1 | 2:1 | 1:1 | 2:1 | 1:1 | 2:1 |
| 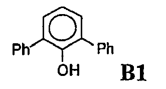 | 0.50 (2.63) | | | | | |
| 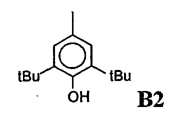 | | | | | | |
| Ph₂NH, B3 | 0.21 (1.82) | | | 0.28 (1.77) | | 0.26 (1.82) |
| 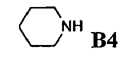 | | | | | | |
| (benzyl)₂NH **B5** | | | 0.47 (2.82) | | | |
| (Me₃Si)₂NH **B6** | 0.33 (2.61) | 0.25 (2.46) | 0.49 (2.76) | 0.40 (2.55) | | |
| Ph-OH, **B7** | | | | | 0.89 | |
| t-Bu-OH, **B8** | | | | | | |
| 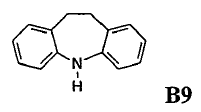 | 0.99 (3.15) | | 0.89 | | 0.99 | |
| (t-Bu)(Me)₂SiOH **B10** | | | | 1.10 (3.37) | | |
| HN(n-C₅H₁₁)₂**B11** | | | | 1.01 (3.47) | 0.37 (12.51) | |

The only polymerization modifier showing a significant improvement in polymerization efficiency is B10₂A₂ (identified by bold type in table 6), which gives a relative polymerization efficiency of 1.10. This polymerization modifier is identified as bis(t-butyldimethylsiloxy)isobutyl aluminum. Other polymerization modifiers tested show utility in preparing polymers having reduced trichlorobenzene solubility (increased crystallinity), albeit at reduced efficiency.

These results indicate that it is possible to affect both catalyst efficiency and polymer crystallinity solely through the use of additives in the polymerization mixture. Accordingly, one use of the present discovery is to add a polymerization modifier to one of two reactors operating in parallel or in series, to produce a polymer having different crystallinity without changing the procatalyst, cocatalyst, or selectivity control agent otherwise employed in the polymerization. For example, by preparing in a first reactor operating under incomplete conversion conditions a highly crystalline propylene homopolymer, charging the reaction mixture to a second reactor, adding ethylene and a polymerization modifier that produces a relatively low crystalline polymer, such as (dipentylamino)di(n-octyl)aluminum (B11A3), and continuing polymerization to prepare a low crystalline ethylene/propylene copolymer, a polymer blend is produced having desirable properties for use as a molding resin.

### Example 3

The reaction conditions and polymerization conditions of Example 2 are substantially repeated using the polymerization modifiers identified in Table 5 as cocatalysts (no TEA). The only compound to provide improved catalytic activity compared to TEA at a molar ratio Ti/Al of 1/500 is the same compound, bis(t-butyldimethylsiloxy)isobutylaluminum, that is shown to improve catalyst efficiency when employed in combination with TEA. The relative efficiency of this catalyst composition is 1.10 and the TBS of the resulting polymer is 3.32. The TBS of the control polymer (TEA cocatalyst, Ti/Al = 1/500) is 3.15. Accordingly, this compound may be employed in a Ziegler-Natta polymerization of propylene in place of a trialkylaluminum cocatalyst in order to achieve improved catalyst efficiency.

## Claims

1. A method for identifying a catalyst composition for use in the heterogeneous Ziegler-Natta addition polymerization of an olefin monomer comprising:
A) providing a first library comprising a plurality of previously selected solid compounds, complexes or mixtures thereof comprising a derivative of a metal of Group 2 of the Periodic Table of the Elements,
B) forming a catalyst composition by sequentially converting the members of said library via solid-to-solid metathesis into solid procatalyst compositions thereby forming a second library
C) sequentially selecting members of the second library and contacting the members with an olefin monomer under olefin addition polymerization conditions in a polymerization reactor in order to produce a resulting polymer product,
D) measuring at least one process or product variable of interest during the polymerization, and
E) selecting the catalyst composition of interest by reference to said process or product variable.

2. A method of claim 1, wherein the metathesis reaction is conducted in a liquid diluent in a reaction vessel and the liquid diluent is subsequently removed by means of filtration.

3. A method of claim 1, wherein the procatalyst composition is formed by a conversion procedure requiring at least two intermediate steps.

4. A method of claim 3, wherein the first procedure is the formation of a solid support material via a halogenation reaction and the second procedure is an impregnation of at least one catalytically active transition metal compound, complex or mixture onto the support.

5. A method of claim 4, wherein the halogenation is conducted by contacting the members of the first library with an internal electron donor and a halogenating agent in the same reactor wherein the impregnation is conducted to thereby form a procatalyst.

6. A method of claim 5, wherein the halogenating agent is TiCl₄ and the halogenation is conducted in the presence of a liquid medium.

7. A method of claim 6, wherein the liquid medium is chlorobenzene, toluene, xylene, or a chlorotoluene.

8. A method of claim 5, wherein the precursor is halogenated twice.

9. A method of claim 8, wherein at least one of the steps is conducted in the same reactor vessel by means of computer controlled, robotic processing and the screening results are stored in at least one memory device.

10. A method of claim 5, wherein the catalyst composition is formed by contacting the procatalyst with a cocatalyst and optionally an external electron donor.

11. A method of claim 10, wherein all of the procedural steps are conducted in the same reactor vessel by means of computer controlled, robotic processing and the screening results are stored in at least one memory device.

12. A method of claim 10, wherein the library is used to form the A axis of an AxB array and a second selection of compositions or process conditions is used to form the B axis of said AxB array and relational database software is used to select the process or product property of interest from among the set of binary pairs of said AxB array.

13. A method of claim 10, further comprising the step of measuring at least one resulting polymer property.

14. A method of claim 3, wherein the process variable that is measured is the quantity of at least one monomer consumed during the polymerization.

15. A method according to any one of the preceding claims, wherein the catalyst composition is formed by combination of a) the Group 2 metal compound, complex or mixture, b) a cocatalyst and c) a polymerization modifier.

## Patentansprüche

1. Verfahren zum Festlegen einer Katalysatorzusammensetzung zur Verwendung bei der heterogenen Ziegler-Natta-Additionspolymerisation eines Olefinmonomers, mit den folgenden Schritten:
A) Bereitstellen einer ersten Bibliothek aus einer Vielzahl von zuvor ausgewählten festen Verbindungen, Komplexen oder Mischungen davon, die ein Derivat eines Metalls der Gruppe 2 des Periodensystems der Elemente umfassen,
B) Herstellen einer Katalysatorzusammensetzung, indem die Mitglieder der Bibliothek nacheinander über Fest-Fest-Metathese in feste Prokatalysatorzusammensetzungen umgewandelt werden, wodurch eine zweite Bibliothek gebildet wird,
C) Auswählen von Mitgliedern der zweiten Bibliothek und dann Inkontaktbringen der Mitglieder mit einem Olefinmonomer unter Olefinadditionspolymerisationsbedingungen in einem Polymerisationsreaktor, um ein resultierendes Polymerprodukt herzustellen,
D) Messen wenigstens einer Prozess- oder Produktgröße, die während der Polymerisation von Interesse ist, und
E) Auswählen der in Frage kommenden Katalysatorzusammensetzung anhand der Prozess- oder Produktgröße.

2. Verfahren nach Anspruch 1, wobei die Metathesereaktion in einem flüssigen Verdünnungsmittel in einem Reaktionsgefäß durchgeführt wird und das flüssige Verdünnungsmittel anschließend durch Filtration entfernt wird.

3. Verfahren nach Anspruch 1, wobei die Prokatalysatorzusammensetzung durch ein Umwandlungsverfahren gebildet wird, das mindestens zwei Zwischenschritte erfordert.

4. Verfahren nach Anspruch 3, wobei der erste Schritt die Bildung eines festen Trägermaterials über eine Halogenierungsreaktion und der zweite Schritt das Imprägnieren mindestens einer katalytisch aktiven Übergangsmetallverbindung, eines Komplexes oder einer Mischung davon auf den Träger darstellt.

5. Verfahren nach Anspruch 4, wobei die Halogenierung durchgeführt wird, indem die Mitglieder der ersten Bibliothek mit einem internen Elektronendonator und einem Halogenierungsmittel in demselben Reaktor in Kontakt gebracht werden, wobei das Imprägnieren durchgeführt wird, um **dadurch** einen Prokatalysator zu bilden.

6. Verfahren nach Anspruch 5, wobei das Halogenierungsmittel TiCl₄ ist und die Halogenierung in Gegenwart eines flüssigen Mediums durchgeführt wird.

7. Verfahren nach Anspruch 6, wobei das flüssige Medium Chlorbenzol, Toluol, Xylol oder ein Chlortoluol ist.

8. Verfahren nach Anspruch 5, wobei der Vorläufer zweimal halogeniert ist.

9. Verfahren nach Anspruch 8, wobei mindestens einer der Schritte mittels einer computergesteuerten, von einem Robotor vorgenommenen Verarbeitung in demselben Reaktionsgefäß durchgeführt wird und die Analyseergebnisse in mindestens einer Speichervorrichtung gespeichert werden.

10. Verfahren nach Anspruch 5, wobei die Katalysatorzusammensetzung **dadurch** gebildet wird, dass der Prokatalysator mit einem Cokatalysator und optional einem externen Elektronendonator in Kontakt gebracht wird.

11. Verfahren nach Anspruch 10, wobei alle Verfahrensschritte mittels einer computergesteuerten, von einem Robotor vorgenommenen Verarbeitung in demselben Reaktorgefäß durchgeführt werden und die Analyseergebnisse in mindestens einer Speichervorrichtung gespeichert werden.

12. Verfahren nach Anspruch 10, wobei die Bibliothek dazu verwendet wird, die A-Achse einer AxB-Anordnung zu bilden, und eine zweite Auswahl von Zusammensetzungen oder Verfahrensbedingungen dazu verwendet wird, die B-Achse der AxB-Anordnung zu bilden, und Software einer relationalen Datenbank dazu verwendet wird, die in Frage kommende Prozess- oder Produkteigenschaft aus dem Satz von binären Paaren der AxB-Anordnung auszuwählen.

13. Verfahren nach Anspruch 10, das ferner den Schritt des Messens mindestens einer resultierenden Polymereigenschaft umfasst.

14. Verfahren nach Anspruch 3, wobei die Prozessgröße, die gemessen wird, die Menge mindestens eines während der Polymerisation verbrauchten Monomers ist.

15. Verfahren nach einem der vorhergehenden Ansprüche, wobei die Katalysatorzusammensetzung gebildet wird durch Kombination a) der Metallverbindung der Gruppe 2, des Komplexes oder der Mischung davon, b) eines Cokatalysators und c) eines Polymerisationsmodifikators.

## Revendications

1. Procédé d'identification d'une composition de catalyseur qui puisse servir dans une polymérisation par addition, avec catalyse Ziegler-Natta en phase hétérogène, d'un monomère de type oléfine, lequel procédé comporte les étapes suivantes :
A) prendre une première bibliothèque comprenant de multiples composés solides, complexes ou mélanges de telles substances, choisis au préalable, comprenant un dérivé d'un métal du groupe 2 du Tableau Périodique des Eléments ;
B) former des compositions de catalyseur en convertissant successivement les éléments de ladite bibliothèque, par métathèse solide-à-solide, en des compositions de pro-catalyseur solide, et constituer ainsi une deuxième bibliothèque ;
C) choisir l'un après l'autre les éléments de cette deuxième bibliothèque et mettre chacun d'eux en contact avec un monomère de type oléfine, dans des conditions de polymérisation d'oléfine par addition et dans un réacteur de polymérisation, afin d'obtenir en résultat un produit polymère ;
D) mesurer au moins une variable de procédé ou de produit intéressante, au cours de la polymérisation ;
E) et sélectionner les compositions de catalyseur qui se révèlent intéressantes pour ce qui est de ladite variable de procédé ou de produit.

2. Procédé conforme à la revendication 1, dans lequel la réaction de métathèse est réalisée au sein d'un diluant liquide, dans un récipient de réaction, lequel diluant liquide est par la suite écarté, par filtration.

3. Procédé conforme à la revendication 1, dans lequel la formation des compositions de pro-catalyseur s'effectue par un procédé de conversion qui nécessite au moins deux étapes intermédiaires.

4. Procédé conforme à la revendication 3, dans lequel la première étape consiste à former un matériau support solide, par une réaction d'halogénation, et la deuxième étape consiste à déposer sur ce support, par imprégnation, au moins un composé de métal de transition ou un complexe, doté d'une activité catalytique, ou un mélange de telles substances.

5. Procédé conforme à la revendication 4, dans lequel on opère la réaction d'halogénation en mettant les éléments de la première bibliothèque en contact avec un donneur d'électrons interne et un agent d'halogénation, dans le réacteur même où aura lieu l'imprégnation, et l'on forme ainsi un pro-catalyseur.

6. Procédé conforme à la revendication 5, dans lequel l'agent d'halogénation est du tétrachlorure de titane TiCl₄ et l'halogénation s'effectue au sein d'un milieu liquide.

7. Procédé conforme à la revendication 6, dans lequel le milieu liquide est du chlorobenzène, du toluène, un xylène ou un chlorotoluène.

8. Procédé conforme à la revendication 5, dans lequel on effectue deux opérations d'halogénation du précurseur.

9. Procédé conforme à la revendication 8, dans lequel au moins l'une des étapes est réalisée dans le même récipient de réaction, selon un mode opératoire robotisé et piloté par ordinateur, et les résultats du criblage sont conservés dans au moins un dispositif à mémoire.

10. Procédé conforme à la revendication 5, dans lequel on forme une composition de catalyseur en mettant un pro-catalyseur en contact avec un co-catalyseur, et en option, avec un donneur d'électrons externe.

11. Procédé conforme à la revendication 10, dans lequel toutes les étapes du mode opératoire sont réalisées dans le même récipient de réaction, selon un mode opératoire robotisé et piloté par ordinateur, et les résultats du criblage sont conservés dans au moins un dispositif à mémoire.

12. Procédé conforme à la revendication 10, dans lequel on utilise la bibliothèque pour définir la dimension A d'une matrice AxB et l'on utilise une deuxième sélection de compositions ou de conditions opératoires pour définir la dimension B de cette matrice AxB, et l'on utilise un logiciel de base de données relationnelle pour sélectionner la caractéristique de produit ou de procédé intéressante dans l'ensemble des paires binaires de ladite matrice AxB.

13. Procédé conforme à la revendication 10, qui comporte en outre une étape de mesure d'au moins une propriété du polymère résultant.

14. Procédé conforme à la revendication 3, dans lequel la variable de procédé mesurée est la quantité d'au moins un monomère consommée pendant la polymérisation.

15. Procédé conforme à l'une des revendications précédentes, dans lequel la composition de catalyseur est formée par combinaison :
a) du composé ou complexe de métal du groupe 2 ou du mélange de tels composés,
b) d'un co-catalyseur,
c) et d'un modificateur de polymérisation.
